## Europäisches Patentamt
## European Patent Office
## Office européen des brevets

(11) Veröffentlichungsnummer: **0 278 458**
**A2**

# EUROPÄISCHE PATENTANMELDUNG

(21) Anmeldenummer: 88101807.1

(22) Anmeldetag: 08.02.88

(51) Int. Cl.⁴: **C04B 33/13 , E04F 15/02**

(30) Priorität: 10.02.87 DE 3704097

(43) Veröffentlichungstag der Anmeldung:
17.08.88 Patentblatt 88/33

(84) Benannte Vertragsstaaten:
**AT BE CH DE ES FR GB IT LI LU NL SE**

(71) Anmelder: Buchtal Gesellschaft mit
beschränkter Haftung
**Buchtalweg**
**D-8472 Schwarzenfeld(Opf.)(DE)**

(72) Erfinder: **Bard, Martin**
**26, Seminargasse**
**D-8450 Amberg(DE)**

(74) Vertreter: **Bockhorni, Josef, Dipl.-Ing. et al**
**Plinganserstrasse 18a Postfach 70 02 09**
**D-8000 München 70(DE)**

(54) Plattenförmiges, Elektrisch leitendes unglasiertes keramisches Element.

(57) Ein plattenförmiges, elektrisch leitendes unglasiertes keramisches Element, bestehend aus einer geformten und gebrannten Mischung aus üblichen keramischen Rohstoffen und wenigstens einem leitenden oder halbleitenden metallischen Oxid, ist gekennzeichnet durch die Verwendung von Oxiden mit whiskerähnlichen Kristallen, d. h. mit einem hohen Schlankheitsgrad von 1:d ≥ 10, wobei diese Oxide in gewichtsprozentualen von 20/n % mit

$$40 > n > 1$$

vorliegen und 1 die Länge und d den Durchmesser der Kristalle bedeuten.

EP 0 278 458 A2

# Plattenförmiges, elektrisch leitendes unglasiertes keramisches Element.

Die Erfindung betrifft ein plattenförmiges, elektrisch leitendes unglasiertes keramisches Element für die Verkleidung von Wänden und Decken, bestehend aus einer geformten und gebrannten Mischung aus üblichen keramischen Rohstoffen und wenigstens einem leitenden oder halbleitenden metallischen Oxid.

Plattenförmige, elektrisch leitende keramische Körper lassen sich zu mehreren zu einem Belag für Wand-und Fußbodenbekleidungen zusammenstellen und stehen dann mit einer unter dem Belag vorzusehenden elektrisch ableitenden Unterkonstruktion elektrisch leitend in Verbindung. Solche Wand-und/oder Fußbodenkonstruktionen eignen sich beispielsweise für Operationssäle, Laboratorien, feuergefährdete Industrieräume, wie Lackiereien, Lackfabriken, Lagerhallen für leicht entzündbare Chemikalien, wie Lösungsmittel od. dgl., usw.. In neuerer Zeit besteht ein Bedarf an solchen keramischen Platten auch für Bereiche, in denen eine spürbare elektrische Entladung bei Personen vermieden werden soll, wie beispielsweise in Büroräumen, in denen Computer und ähnliche elektrische und elektronische Geräte aufgestellt sind oder in denen elektronische Bauteile, wie Chips, hergestellt werden. An Fußbodenbeläge in Operationssälen wird die Forderung gestellt, daß eine ständige Ableitung von statischer Elektrizität gewährleistet ist, zugleich aber verhindert wird, daß ein Abfluß von Strom in gefährlicher Stärke beim Berühren mangelhaft isolierter, stromführender Teile durch den menschlichen Körper erfolgt. Auch hier finden solche plattenförmige elektrisch leitende keramische Elemente als Bestand teile von Bodenbelägen Verwendung. Soll die gestellte Forderung erfüllt sein, dann müssen solche Beläge einen elektrischen Widerstand in der Größenordnung von $10^4$ bis $10^6$ Ohm aufweisen.

Solche aus keramischen plattenförmigen Elementen erstellte Beläge haben gegenüber PVC- und anderen Kunststoffbelägen Vorteile, weil jene eine nur unzureichende Beständigkeit gegen organische Lösungsmittel und andere zur Reinigung und Desinfektion verwendete Chemikalien ausweisen. Außerdem müssen für solche Bodenbeläge zu ihrer Verbindung mit der elektrisch ableitenden Unterkonstruktion elektrisch leitende organische Kleber verwendet werden, deren Leitfähigkeitswerte nicht über längere Zeiträume hinweg stabil sind.

Bei Teppichbelägen aus Kunststofffasern kommt es darüber hinaus zu der bekannten Selbstaufladung mit statischer Elektrizität, die man durch Einweben oder sonstigen Einbau von elektrisch leitenden Fäden oder Drahtgeweben zu vermeiden versucht, ein Vorgehen, das teuer ist und auch nicht zu befriedigenden Ergebnissen führt.

Zuerst hat man versucht, auf plattenförmigen keramischen Elementen zur Herstellung solcher ableitender Beläge auf der Sichtseite der Platten einen elektrisch leitenden Überzug vorzusehen. In "Baukeramik" 8/84, Seite 96 ist eine grau-blaue Leitfliese im Format 15 x 15 cm beschrieben, die aus keramischem Material besteht und einen über die Seitenkanten hinweggezogenen elektrisch leitenden Überzug aufweist, so daß die Ableitung von Elektrizität nur über das an die Kanten solcher Platten anstoßende Fugenmaterial erfolgen kann, das dann aus elektrisch leitend gemachten Grundstoffen bestehen muß. Da solches Fugenmaterial dazu neigt nachzuschwinden, besteht die Gefahr, daß der elektrische Kontakt mit den Fliesenkanten wenigstens teilweise verloren geht. Außerdem wäscht sich solches Fugenmaterial bei häufiger Reinigung rasch aus, was ebenfalls zur Verringerung der Kontaktflächen führen kann. Damit ändert sich nicht nur der Ableitwiderstand, sondern es leidet auch die mechanische Belastbarkeit des Plattenbelages. Außerdem entstehen beim Schwinden bzw. beim Abgetragenwerden des Fugenmaterials zwischen den Plattenkanten und dem Fugenmaterial kleinste Zwischenräume, die sich mit Keimen zusetzen können, was z. B. für Operationsräume absolut untragbar ist. Schließlich sind die bekannten Platten vergleichsweise kleinformatig, so daß sie der in der Prüfnorm verlangten Standortübergangswiderstandsnorm (VDE-Bestimmung 0100/5.73 § 24) nicht genügen.

Eine Verbesserung beschreibt die europäische Patentanmeldung 86 109 754.1, die auf die Anmelderin zurückgeht. Aus ihr ist ein plattenartiges keramisches Element bekannt, das auf einer Sichtseite mit einer elektrisch leitenden Oberflächenglasur versehen ist, die bei Verlegung des plattenartigen keramischen Elementes mit mehreren solcher Elemente zu einem Belag für Wand-oder Fußbodenbekleidungen mit einer unter dem Belag vorzusehenden, elektrisch ableitenden Unterkonstruktion leitend in Verbindung steht. Die Verlegung solcher Platten z. B. zu einem Fußbodenbelag ist somit völlig unabhängig vom Fugenmaterial, so daß ein Fugenmaterial gewählt werden kann, das hinsichtlich seiner Abriebfestigkeit, seiner Elastizität, insbesondere Dauerelastizität, und seiner hygienischen Eigenschaften allen an ein solches Material zu stellenden Forderungen in vollem Umfang gerecht wird und ermöglicht, daß wenigstens ein Teil der der Sichtseite abgewendeten Seite des plattenartigen keramischen Elementes mit einem elektrisch gut leitendem Material beschichtet werden kann, das mit der Oberflächenglasur elektrisch leitend in Verbindung steht.

Um von der Ableitung über das Fugenmaterial unabhängig zu werden, wurde auch bereits zu Fußbodenfliesen übergegangen, die durch Brennon von geformten Mischungen aus Steinzeug-oder Töpferton und Eisenoxid in einer beim Brennon von Bodenfliesen üblichen Atmosphäre hergestellt sind. Die DE-B-17 71 361 beschreibt ein Verfahren zur Herstellung solcher elektrisch halbleitender keramischer Bodenfliesen. Allerdings erhält man durch die Beimengung von Eisenoxid zum keramischen Material dunkel gefärbte unglasierte keramische Oberflächen.

Nach der DE-B-12 78 321 werden zur Herstellung elektrisch halbleitender keramischer Bodenfliesen Mischungen verwendet, die durch Zugabe von weiteren Oxiden, wie $ZnO$, $CuO$, $CoO$, $PbO$, $Sb_2O_3$, $SnO_2$, $BaO$, $CaO$, $MgO$ u. a. einzeln oder gemischt und in Mengen von 0,5 bis 7 %, bezogen auf den gebrannten Scherben, ein weiteres Absinken des spezifischen Widerstandes bewirken sollen und Veränderungen der Brennfarbe von rot bis schwarz erlauben. Diese Fliesen werden aus dem Ausgangsmaterial gepreßt und daher sind sie in ihren Größenabmessungen auf z. B. 5 x 5 cm beschränkt, wie sich aus einem Hinweis aus der DE-B-12 13 336 ergibt.

Aus dieser DE-B-12 13 336 entnimmt der Fachmann ferner ein Verfahren zur Herstellung elektrisch halbleitender Fliesen, gemäß dem gekörnte keramische Bodenfliesenmasse herkömmlicher Art im Gewichtsverhältnis 4:1 bis 12:1 mit einer $Fe_2O_3$ und andere Metalloxide, vorzugsweise $ZnO$ enthaltenden keramischen Masse, die im gebrannten Zustand einen elektrisch leitenden Scherben ergibt, gemischt, zu Fliesen verpreßt und bei 1200 bis 1250°C im normalen Industrieofen bei oxidierender Atmosphäre gebrannt wird.

Auch bei diesem Verfahren werden also die Platten aus trokkener Ausgangsmasse gepreßt, was das endgültige Plattenformat erheblich einschränkt.

Wegen der mit der Körperleitung unbedingt verbundenen Forderung nach einer Wasseraufnahme < 1 % zur Vermeidung einer schwankenden Ableitfähigkeit aufgrund unterschiedlichen Feuchtigkeitsgehalt der Fliesen, zurückzuführen auf eine bestimmte Porosität und unterschiedlichen Wassergehalt in diesen aufgrund wechselnden Feuchteangebotes z. B. über die Bodenreinigung, kommen bei den vorgenannten Lösungsvorschlägen die mit einem so hohen Eisenoxidanteil verbundenen Schwindungs-und Rißprobleme bei der Herstellung besonders stark zum Tragen. Eine Reduzierung des Eisenoxidanteiles kann wegen des dann sofort eintretenden Effektes einer entsprechenden Erhöhung des elektrischen Widerstandes nicht vorgenommen werden.

Der Versuch, andere metallische, elektrische Leiter in die keramische Masser einzubinden, weil mit ihnen andere Farbeffekte zu erwarten wären, - scheitert an dem zu hohen Anteil der leitenden Teile am Gesamtvolumen, weil für die Ableitung von Elektrizität durch den keramischen Körper der Kontakt der einzelnen Teilchen untereinander eine unabdingbare Voraussetzung darstellt und die üblichen elektrisch leitenden Metallpulver oder -granulate kugelförmig ausgebildet sind. Mit solchen Leitern, die eine schlechte elektrische Leitfähigkeit aufweisen, verschärft sich das Mengenproblem zur Erzielung einer genügend großen Leitfähigkeit. Bei solchen, die eine gute elektrische Leitfähigkeit aufweisen, ergibt sich das gleiche Problem bei der Erzielung einer Leitfähigkeit als solcher, da diese dann nicht mehr Klein genug gehalten werden kann, um einen genügend kleinen Standortübergangswiderstand zu gewährleisten. Hinzu kommt bei solchen Lösungsversuchen das Unvermögen, Sinter-und Schwindungsverhalten solcher Massen technisch und kostenmäßig zu beherrschen.

Hier setzt die Erfindung ein, die sich zur Aufgabe gestellt hat, ein dichtes unglasiertes keramisches plattenförmiges Element zu schaffen, das auf seiner Sichtseite anliegende elektrische Spannungen unmittelbar durch die Keramik, also nicht über die Fuge, in eine unter dem aus solchen Elementen gebildeten Belag vorgesehene elektrisch ableitende Unter konstruktion ableitet, wobei der Widerstand eines solchen Belages zwischen $10^4$ und $10^6$ Ohm beträgt, das äußere Erscheinungsbild des Elementes durch helle Farbtöne geprägt ist und das Element in einer Formatgröße herstellbar ist, die ein Vielfaches von 5 x 5 cm beträgt.

Diese Aufgabe wird erfindungsgemäße dadurch gelöst, daß in einem normalen keramischen Versatz, der bei den üblichen Brenntemperaturen zu einer Wasseraufnahme gegen Null tendiert Oxide mit whiskerähnlichen Kristallen, d. h. mit einem hohen Schlankheitsgrad von $1 : d \geq 10$ verwendet werden, wobei diese Oxide zusammen in einer gewichtsprozentualen Menge von $20/n$ % mit $40 > n > 1$ vorliegen und 1 die Länge und d den Durchmesser der Kristalle bedeuten.

Durch die vorliegende Nadelform der leitenden Teilchen, ausgedrückt durch das Verhältnis l:d einerseits und die ihnen eigene elektrische Leitfähigkeit andererseits, bestimmt sich der zu erzielende Ableitwiderstand für einen vorgegebenen plattenförmigen Körper bestimmter Abmessung durch den prozentualen Mengenanteil am Körpervolumen.

In Abänderung dieser Lösung der der Erfindung zugrunde liegenden Aufgabe können anstelle von leitenden Metalloxiden hohen Schlankheitsgrades die Oxide auch in keramische oder Glasfasern ähnlicher Dimensionen eingebaut sein, die dem keramischen Ausgangsmaterial beigemischt sind.

Durch eine solche gezielte Auswahl von elektrisch leitfähigen Partikeln wird der Gewichtsanteil der leitfähigen Substanz soweit herabgesetzt, daß eine exakte Reproduzierbarkeit des angestrebten elektrischen Widerstandes gegeben ist, weil schon geringfügige Änderungen des Anteiles an solchen Oxiden oder Oxidträgern große Auswirkungen auf den Widerstandswert besitzen. Im Gegensatz hierzu ist bei den bisher zum Einsatz kommenden Metalloxiden weitgehend kugelförmiger Gestalt ein solcher Einfluß überhaupt erst ab einem sehr hohen Anteil leitender Substanz von ca. 25 % feststellbar und dann auch nur mit großer Schwankungsbreite. Durch den nadelförmigen Habitus der elektrisch leitenden Partikel wird infolge der gegebenen statischen Verteilung die elektrische Ableitung in genügender Form gewährleistet. Die daraus resultierende geringere Anteilsmenge läßt die Farbe des Grundscherbens wieder zur Geltung kommen, so daß unglasierte ableitfähige Beläge unterschiedlichster Farbnuancen erzielt werden können.

Da die geringen Anteile der elektrisch leitenden Partikel das Verformungs-und Schwindungsverhalten der keramischen Masse nur geringfügig beeinflussen, lassen sich solche keramische plattenförmige Körper mit den üblichen Formgebungs- und Brennverfahren, d. h. auch im Auspreßverfahren in den dabei möglichen Dimensionen eines Vielfachen von 5 x 5 cm herstellen.

Weil die elektrische Ableitung eindeutig über den Körper der Keramik in die Unterkonstruktion erfolgt, erübrigen sich elektrische Ableitungen über leitfähiges Fugenmaterial, vielmehr kann die Fuge so ausgebildet werden, wie es Abreibfestigkeit, Reinigungs-oder hygienische Gesichtspunkte erfordern.

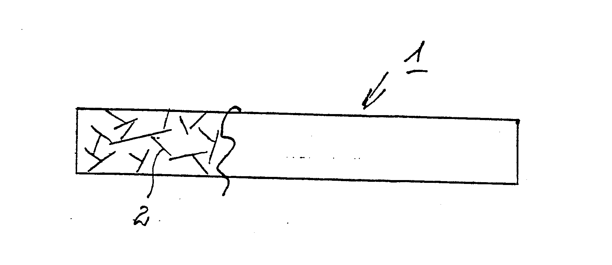

Die Zeichnung zeigt eine Seitenansicht eines plattenförmigen keramischen Elementes 1 nach der Erfindung, wobei im aufgebrochen gezeichneten Teil die schlanken, Brücken herstellenden Kristalle 2 oder auch entsprechend dotierte Fasern deutlich zu erkennen sind. Die Dotierung der Fasern erfolgt zweckmäßigerweise dadurch, daß die Fasern mit den metallischen Oxiden beschichtet oder bereits während der Faserherstellung die Oxide in die Schmelze der Fasern eingebracht sind.

Ausführungsbeispiel: 55 % Ton
25 % Feldspat
15 % Quarz
5 % Leitgemenge aus Verbindungen von Fe, Zn, Sn, Sb im Gew.-Verhältnis von 6:1:1:1.

## Ansprüche

1. Plattenförmiges, elektrisch leitendes unglasiertes keramisches Element, für Wand-und Bodenbeläge bestehend aus einer geformten und gebrannten Mischung aus üblichen keramischen Rohstoffen und wenigstens einem leitenden oder halbleitenden metallischen Oxid, **gekennzeichnet** durch die Verwendung von metallischen Oxiden mit whiskerähnlichen Kristallen, d. h. mit einem hohen Schlankheitsgrad von $1 : d \geq 10$, wobei der mengenmäßige Anteil dieser Oxide $20/n$ Gew.-% mit
$$40 > n > 1$$
beträgt und 1 die Länge und d den Durchmesser der Kristalle bedeuten.

2. Plattenförmiges, elektrisch leitendes, unglasiertes keramisches Element, bestehend aus einer geformten und gebrannten Mischung aus üblichen keramischen Rohstoffen und wenigstens einem leitenden oder halbleitenden metallischen Oxid, dadurch **gekennzeichnet,** daß die Oxide als Dotierung in keramische Fasern oder Glasfasern eingebaut sind, die in die keramische Ausgangsmischung in einem Mengenanteil von $20/n$ Gew.-% mit
$$40 > n > 1$$
eingemischt sind und einen Schlankheitsgrad von
$$1 : d \geq 10$$
aufweisen, wobei 1 die Länge und d den Durchmesser der Glasfasern bedeuten.